# EUROPEAN PATENT SPECIFICATION

(11) **EP 2 233 859 B1**
(45) Date of publication and mention of the grant of the patent: **07.05.2014**
(21) Application number: 08868504.5
(22) Date of filing: 26.12.2008
(51) Int. Cl.: F24J 2/14, F24J 2/10, F24J 2/52, F24J 2/54

(54) **SOLAR ENERGY CONCENTRATOR/COLLECTOR DEVICE**
SONNENENERGIEKONZENTRATOR/-KOLLEKTOR
DISPOSITIF CONCENTRATEUR-CAPTEUR D'ÉNERGIE SOLAIRE

(30) Priority: 28.12.2007 ES 200703464
(43) Date of publication of application: 29.09.2010
(73) Proprietor: Tecnologia Solar Concentradora, SL, 07121 Palma (Illes Balears) (ES)
(72) Inventor: MARTINEZ MOLL, Victor, E-08009 Barcelona (ES); PUJOL NADAL, Ramon, E-08009 Barcelona (ES); PAZ BERNALES, Huascar, E-08009 Barcelona (ES); RIBA ROMEVA, CARLES, E-08009 Barcelona (ES); MARTINEZ VERDU, DAVID, E-08009 Barcelona (ES); MOIA POL, ANDREU, E-08009 Barcelona (ES); SCHWEIGER, HANS, E-08009 Barcelona (ES)
(74) Representative: Gislon, Gabriele
(86) International application number: PCT/ES2008/000801
(87) International publication number: WO 2009/083626

(56) References cited:
- WO-A1-99/20953
- WO-A1-99/23424
- ES-A6- 2 002 339
- GB-A- 2 034 877
- US-A- 4 205 659
- US-A- 4 324 947
- US-A- 4 602 853
- US-A- 5 542 409

## Description

### Technical Field

The present invention generally relates to a solar energy concentrator-collector device and more specifically to a solar energy concentrator-collector device comprising a stationary reflector for reflecting and concentrating the sun's rays and a mobile receiver moved by a tracking mechanism for following the maximum confluence of the sun's rays reflected by the fixed reflector as the relative position of the sun changes.

### Background of the Invention

Solar collectors configured to collect thermal or photovoltaic energy from the sun's rays directly impinging on the same are known. However, the energy efficiency of such collectors is relatively low due to the low energy density of the impinging rays. There are solar collectors of this type which use thermal energy of the sun's rays to heat a heat-transfer fluid. However, the heat-transfer fluid can only reach rather low temperatures which do not allow the thermal energy to be transformed into mechanical work.

Patent US-A-3868823 discloses a concentrator-collector device comprising reflective surfaces suitable for reflecting substantially parallel impinging rays towards respective linear foci which move in a predetermined path in response to changes in the angle of the impinging rays, linear receivers arranged for receiving the reflected rays, and tracking mechanisms driven to move the receivers in coincidence with the mentioned linear foci as the linear foci shift along said predetermined path. Each reflective surface can be a continuous concave surface or it can be formed by different planar segments. In one application, the reflective surfaces are arranged to reflect the sun's rays and the receiver includes a duct for conveying a heat-transfer fluid which starts to boil because of the heating effect of the sun's concentrated rays, such that the resulting steam can be used to generate mechanical work.

Patent GB-A-1581253 describes a concentrator-collector device similar to that of the mentioned patent US-A-3868823, in which the reflective surfaces of the fixed reflector are supported on a sandwich structure made up of an upper sheet of metal, a lower sheet of metal and rigid insulating foam between both. In one embodiment, the reflective surfaces are provided by a polished outer surface of the upper sheet of metal. Several sandwich structures are arranged next to one another and their side edges are joined together in a tight manner for the purpose of functioning like a roof of a building. Several linear receivers are integrated in a mobile structure supported by a plurality of pivoting supporting arms assembled on a fixed structure supporting the reflector, such that the mobile structure, the pivoting supporting arms and the fixed structure function like an articulated parallelogram for guiding the movement of all the receivers in unison with respect to their respective reflective surfaces along a circular path selected for following the maximum concentration of the sun's reflected rays. A tracking mechanism driven by a motor is connected by means of a drive arm to the mobile structure to move the mobile structure along a portion of said circular path synchronously with the relative movement of the sun.

For good efficiency, the relative positions between the reflective surfaces and the receivers are critical for assuring that the linear receivers coincide at all times with the areas of maximum confluence of reflected rays. This involves achieving precision in the positions of the reflective surfaces with respect to one another and with respect to the fixed structure during the installation of the fixed reflector, precision in the positions of the linear receivers with respect to one another and with respect to the mobile structure during the construction and installation of the mobile structure, and precision in the positions of the shafts on which the pivoting supporting arms guiding the movements of the mobile structure in relation to the reflective surfaces rotate during the installation of the mobile structure and of the associated tracking mechanism in the fixed structure. Minor accumulated tolerances or errors in the positioning of the different elements can mean that the linear receivers are located and move shifted away from the areas of maximum confluence of reflected rays, and thereby the benefit of concentrating the sun's rays is lost to a greater or lesser extent.

The mentioned patents US-A-3868823 and GB-A-1581253 neither describe nor suggest any specific device or process for positioning the different elements of the concentrator-collector device with respect to one another with suitable precision. A classic process for installing a concentrator-collector device of this type comprises fixing the reflective surfaces on a fixed structure, building the mobile structure including the linear receivers and installing the mobile structure on the fixed structure by means of the pivoting arms and the tracking mechanism, all using the measurement of distances, levels, plumb bobs, etc. *in situ,* and performing cutting, drilling, welding operations, etc. *in situ.* This classic process has been shown to be rather inoperative due to the time consumed and the low level of precision obtained.

Another aspect to be taken into account is how to determine the path that a linear receiver must follow in order to follow the maximum concentration of the sun's rays reflected by a reflective surface in the form of a ruled parabolic or approximately parabolic concave surface when the angle of incidence of the sun's rays changes as the relative position of the sun changes. In fact, with a reflective parallel ruled parabolic surface, the sun's reflected rays are concentrated only in a linear focus, which coincides with the focus of the parabola, when the sun's rays have normal incidence, i.e., parallel to the axis of the parabola. When the sun's rays impinge forming an angle with respect to the normal, the maximum concentration of the rays is scattered in the area of a triangle formed between the rays reflected from a first end edge, from a second opposite end edge and from the center of the reflector. The mentioned triangle increases its size as the angle of incidence of the sun's rays moves away from the normal, i.e., the dispersion of the reflected rays is greater the more obliquely the sun's rays impinge on the reflector. The growth rate of the triangle reduces the greater the distance from the focus to the vertex of the parabola in relation to the width between opposite end edges of the reflector.

Patent JP-A-10026423 describes a solar energy concentrator-collector device provided with a fixed concave reflector and a mobile receiver connected to a tracking mechanism capable of moving the mobile receiver along a path which follows the locus of the centers of imaginary circles inscribed in the mentioned triangles formed between the rays reflected from the right end, from the left end and from the center of the reflector as the angle of incidence of the sun's rays changes. There are established limit angles of incidence to the right and the left of the normal, for which the size of the triangle is maximum. The receiver is cylindrical in shape and has a diameter equal to that of the imaginary circle inscribed in the maximum sized triangle, which assures that the receiver will collect all the rays reflected by the reflector along its entire path.

A drawback of the approach used in the mentioned patent JP-A-10026423 is that it does not take into account other factors which would allow optimizing the performance of the device using a smaller sized receiver, such as, for example, the fact that the energy of the concentrated rays in the triangle is not uniform, being higher in the proximities of the side of the triangle formed by the rays reflected from the center of the reflector and lower in the proximities of the opposite vertex.

### Disclosure of the Invention

Throughout this specification, the term "solar collector device" is used to designate a device the function of which is to transform solar radiation into thermal energy (thermal solar collector device) or electric energy (photovoltaic solar collector device), which can be made up of several sub-systems such as a receiver, reflector, tracking mechanism. The term "receiver" is used to designate a component of a solar collector in which the transformation of the solar radiation into thermal or electric energy takes place. The term "reflector-concentrator" is used to designate a sub-system present in a solar collector the function of which is to concentrate the solar radiation and direct it towards the receiver using a high specular reflectance surface as a means for concentrating the energy. This increases the efficiency of the energetic transformation while at the same time the necessary receiver surface is reduced. The term "linear focus" is used to designate an area of the space where the radiation reflected by the reflector-concentrator reaches its maximum density and which has an elongated, substantially rectilinear shape. A linear focus is produced by a reflective parallel ruled concave surface, for example, a reflective surface with a parabolic or approximately parabolic cross-section, several reflective surface sections, each with a parabolic or approximately parabolic cross-section, or a plurality of planar reflective surface sections arranged like a Fresnel mirror. Thus, the linear focus, although in some theoretical cases can have the shape of a geometric line, in practice it takes up a certain elongated, approximately prismatic volume in space (see, for example, patent JP-A-10026423). The term "tracking mechanism" is used to designate a system which allows the positioning of either the reflector-concentrator, the receiver, or the assembly of both, according to the position of the sun, such that the linear focus produced by the reflector-concentrator at all times coincides with the position of the receiver.

The present invention contributes to mitigating drawbacks of the prior art by providing a solar energy concentrator-collector device built from modular elements prepared for being assembled or fixed *in situ* using conventional fixing means, such as screwing elements or the like, or retaining elements having quick action by elastic deformation. The modular elements are provided with respective positioning configurations suitable for being mutually coupled during the assembling or fixing operations to provide precise positioning of the different modular elements. This allows the quick and easy installation of the device on a fixed supporting structure, such as, for example, a roof of a building or a structure made on purpose, with great precision in the relative positions of its components in comparison with other devices of the prior art.

To that end, the solar energy concentrator-collector device of the present invention comprises a stationary reflector-concentrator formed by a plurality of reflector-concentrator modules arranged forming a matrix of longitudinal and transverse rows, where each of said reflector-concentrator modules comprises a frame to which at least one upper element carrying at least one reflective surface portion is fixed. Each reflective surface portion is concave and elongated and is configured to reflect the sun's rays and concentrate them in a linear focus parallel to a longitudinal direction thereof. In the stationary reflector-concentrator, the reflective surface portions are arranged aligned in the longitudinal rows forming, as a whole, reflective parallel elongated concave surfaces next to one another. The reflective surfaces are joined to a stationary structure formed by a plurality of parallel supporting profiles and by the frames themselves of the reflector-concentrator modules.

More specifically, the frames of the reflector-concentrator modules of each row are fixed at opposite ends or sides to two of said supporting profiles by means of conventional fixing means. The solar energy concentrator-collector device furthermore comprises a mobile receiver with a plurality of elongated mutually parallel receptor elements arranged parallel to the direction of said linear foci and joined to a mobile structure, and a tracking mechanism connected to said stationary structure and to said mobile structure in order to support and move the mobile structure on the reflective surfaces of the stationary reflector-concentrator in a path so that said receptor elements follow the maximum confluence of the sun's rays reflected by the reflective surfaces as the relative position of the sun changes.

The mentioned tracking mechanism may comprise at least three base bodies fixed to at least two of the supporting profiles by means of conventional fixing means, and each of said base bodies rotationally supports at least one supporting shaft on which a pivoting arm linked to the mobile structure for guiding the movements of the mobile structure is assembled.

Each base body of the tracking mechanism comprises first receiver positioning configurations precisely positioned with respect to said supporting shaft, and second receiver positioning configurations precisely positioned with respect to said second module positioning configurations are provided in the corresponding supporting profiles, or in auxiliary parts fixed thereto. The mentioned first receiver positioning configurations cooperate with said second receiver positioning configurations in order to position each base body in a predetermined operative position in relation to the corresponding supporting profile and thereby assuring a predetermined degree of precision for said path of the mobile receiver in relation to said stationary reflector-concentrator. In other words, a series of elements making up the structure and the tracking mechanism of the solar energy concentrator-collector device, which are connected to one another by a chain of mutually coupled positioning configurations which guarantee the correct positioning of the mobile receiver with respect to the stationary reflector-concentrator, are arranged between the collectors of the mobile receiver and the reflector-concentrator modules of the stationary reflector-concentrator.

The present invention provides an optimized path for the receptor elements in relation to the reflecting elements. The mentioned optimized path of the receptor element has been obtained from an iterative theoretical calculation for different shapes and proportions of the reflective surface portion and for different ranges of incidence conditions of the sun's rays simulating all the seasons of the year. The calculations have been performed taking many factors into account, for example, the energy of the concentrated rays in the mentioned triangle is higher in the proximities of the side of the triangle formed by the rays reflected from the center of the reflector than in the proximities of the opposite vertex. It has thus been found that an optimal reflective surface has substantially the shape of a ruled surface having a substantially parabolic cross-section with two longitudinal side edges, a parabola vertex, a parabola axis and a linear focus coinciding with the parabola focus. Although it is not absolute necessary, the two mentioned longitudinal side edges are generally equidistant to said parabola vertex. With one such reflective surface, an optimal circular path for a collecting element passes through said parabola focus and has a center on said parabola axis, a lower point in the lower intersection of the path with the parabola axis, and a diameter slightly greater than a distance between the parabola focus and said parabola vertex. The optimal value for the ratio of the diameter of the circular path with respect to said distance from the parabola focus to the parabola vertex is within the range 1<D/FV≤1.10, i.e., the diameter is greater than the distance from the parabola focus to the parabola vertex but less than or equal to 1.10 times the distance from the parabola focus to the parabola vertex. A likewise significant parameter is the ratio of the width, i.e., the distance between the side edges of the reflective surface, with respect to the diameter of the circular path. It has been found that an optimal value for this parameter is in the range of 1:0.9 to 1:2.0.

With this construction, the present invention provides a solar energy concentrator-collector device which can be installed in a relatively easy manner with a guarantee in the precision of the relative positioning of its components and with an optimized path for the receptor elements of the mobile receiver.

### Brief Description of the Drawings

The previous and other features and advantages will be more fully understood from the following detailed description of several exemplary embodiments with reference to the attached drawings, in which:
Figure 1 is a perspective view of a solar energy concentrator-collector device according to an embodiment of the present invention;
Figure 2 is a perspective view of a reflector-concentrator module forming part of a stationary reflector-concentrator of the concentrator-collector device of Figure 1;
Figure 3 is a partial perspective view of three different types of supporting profiles forming part of a stationary structure to which the stationary reflector-concentrator of Figure 1 is joined;
Figure 4 is a partial exploded perspective view showing a fixing device for joining the reflector-concentrator module of Figure 2 to one of the supporting profiles of Figure 3;
Figures 5 and 6 are partially sectioned partial views showing the operation of the fixing device of Figure 4;
Figure 7 is a side elevational view of the solar energy concentrator-collector device of Figure 1;
Figure 8 is a cross-section view taken along the plane indicated VII-VII in Figure 1;
Figure 9 is a detailed elevational view showing a base body of a tracking mechanism forming part of the solar energy concentrator-collector device of Figure 1;
Figure 10 is a detailed cross-section view showing the fluid connections of receptor elements forming part of a mobile receiver of the solar energy concentrator-collector device of Figure 1;
Figure 11 is a schematic depiction of the path of the mobile receiver with respect to the stationary reflector-concentrator provided by the tracking mechanism; and
Figure 12 is a partial elevational view of another embodiment of the present invention including a mechanism for the orientation of the receptor elements according to the changing position of the mobile receiver.

### Detailed Description of Exemplary Embodiments

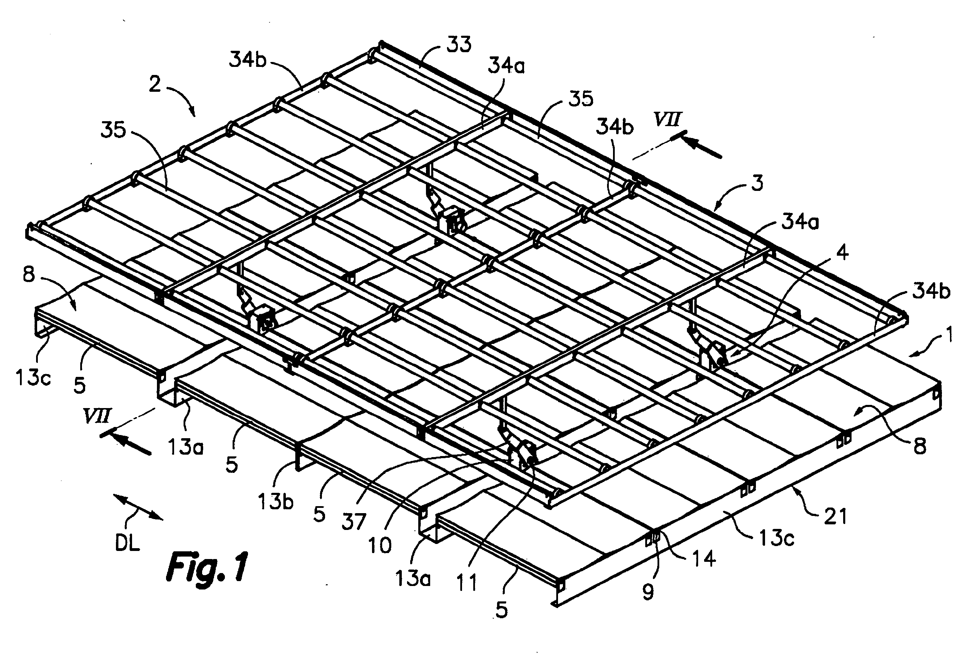

Referring first to Figure 1, there is shown a solar energy concentrator-collector device according to an embodiment of the present invention, comprising a stationary reflector-concentrator 1 joined to a stationary structure 21, a mobile receiver 2 joined to a mobile structure 3 and a tracking mechanism 4 connected to the mentioned stationary structure 21 and mobile structure 3 in order to support and move said mobile receiver 2 with respect to said stationary reflector-concentrator 1.

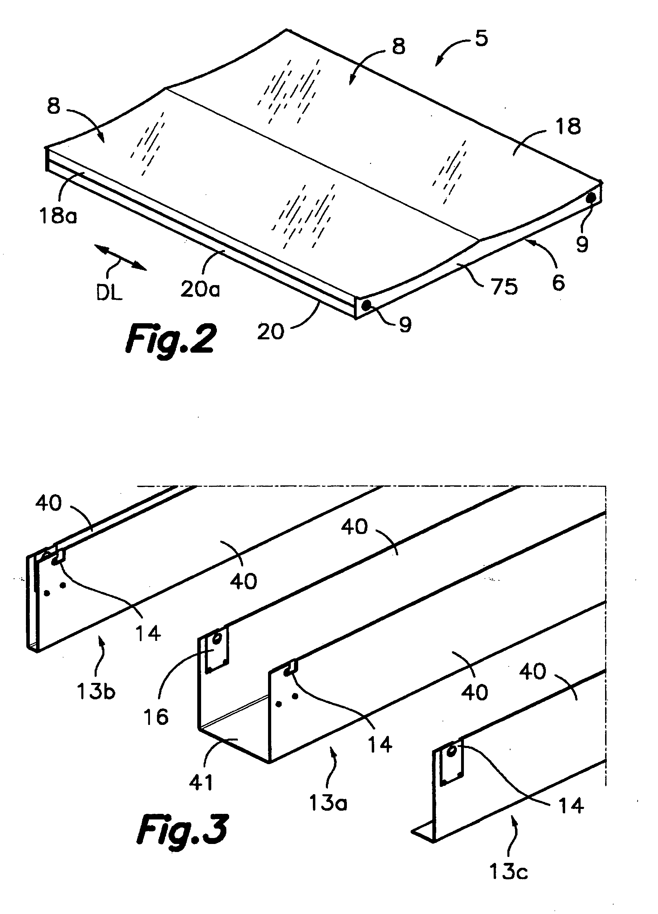

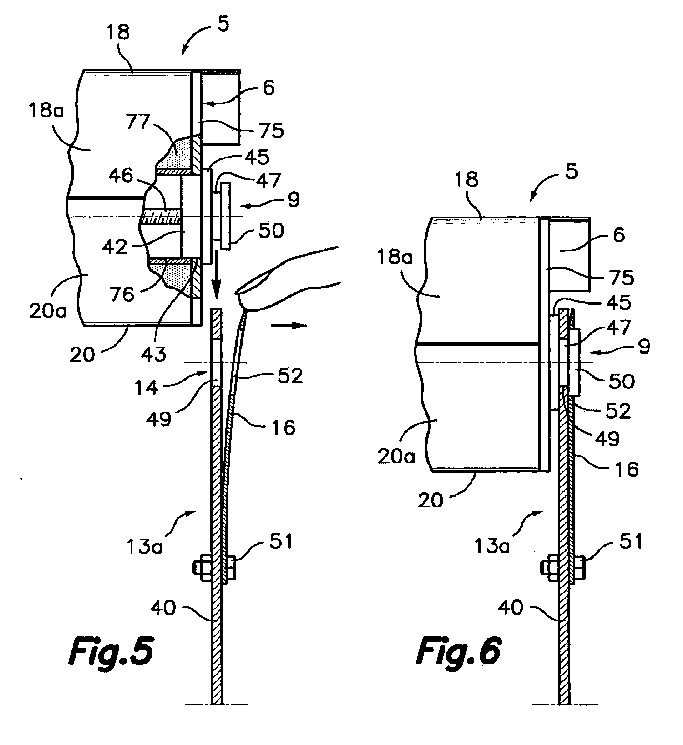

The stationary reflector-concentrator 1 includes a plurality of reflector-concentrator modules 5 (one of which is shown in Figure 2) arranged forming a matrix of longitudinal and transverse rows and connected to a plurality of parallel supporting profiles 13a, 13b, 13c for forming a stationary structure 21. As is best shown in Figure 2, each of said reflector-concentrator modules 5 comprises a frame 6 to which an upper element 18 having a reflective surface is fixed. In the embodiment shown, the upper element 18 is an upper sheet of metal defining two reflective concave arched surface portions 8 and side extensions 18a bent downwards. The reflective surface portions 8 have a polished reflective outer surface. The mentioned frame is formed, for example, by a pair of opposite end plates 75 closing the reflector-concentrator module 5 at its two longitudinal ends, connected to one another by internal longitudinal connection members 76 (Figure 5). The reflector-concentrator module 5 furthermore comprises a lower sheet 20 with side extensions 20a bent upwards, and a filler material 77 (Figure 5), such as, for example, expanded polyurethane, arranged between the upper element 18, the lower sheet 20 and the end plates 75. Furthermore, the filler material 77 is adhered to the upper element 18, to the lower sheet 20 and to the frame 6, said longitudinal connection members 76 of the frame 6 being embedded in the filler material 77. The filler material 77 is rigid enough to precisely guarantee a predetermined stable operative position of the upper element 18, and accordingly of the reflective surface portions 8, in relation to the frame 6. Alternatively, the reflector-concentrator module 5 could comprise one single reflective surface portion 8, or more than two of them, and the reflective surfaces could be provided by any number of additional reflective elements joined to the upper element 18 instead of being a polished surface thereof.

Each reflective surface portion 8 of the reflector-concentrator module 5 substantially has the form of a ruled concave surface, elongated, configured to reflect the sun's rays and concentrate them in a linear focus parallel to a longitudinal direction indicated by means of the arrow DL in the figures. In the concentrator-collector device, the reflective surface portions 8 of the reflector-concentrator modules 5 forming longitudinal rows are aligned forming said elongated reflective surfaces arranged parallel next to one another to concentrate the sun's reflected rays in a plurality of respective elongated linear foci. The mobile structure 3 of the mobile receiver 2 is formed by a plurality of longitudinal profiles 33 and transverse profiles 34a, 34b connected to one another forming a grid in which a plurality of elongated receptor elements 35 are installed forming alignments arranged parallel to the direction of said linear foci F. There is an alignment of receptor elements 35 for each alignment of reflective surface portions 8 and accordingly for each linear focus. The receptor elements 35 are supported at their ends between every two of said transverse profiles 34a, 34b in the grid of the mobile structure 3. The mentioned tracking mechanism 4 comprises four base bodies 10 fixed to two of the supporting profiles 13a, and each of said base bodies 10 rotationally supports a supporting shaft 11 on which a pivoting arm 37 connected to the mobile structure 3 for guiding the movements of the mobile structure 3 is assembled. As will be explained in detail below, the tracking mechanism 4 is motor-driven and controlled for moving the mobile structure 3 above said stationary reflector-concentrator 1 in a path so that the receptor elements 35 follow the maximum confluence of the sun's rays reflected by the reflective surfaces as the relative position of the sun changes. The number of base bodies 10 is not limited to four, although it will be understood that at least three base bodies 10 fixed to at least two of the supporting profiles 13a are necessary for supporting the mobile structure 3.

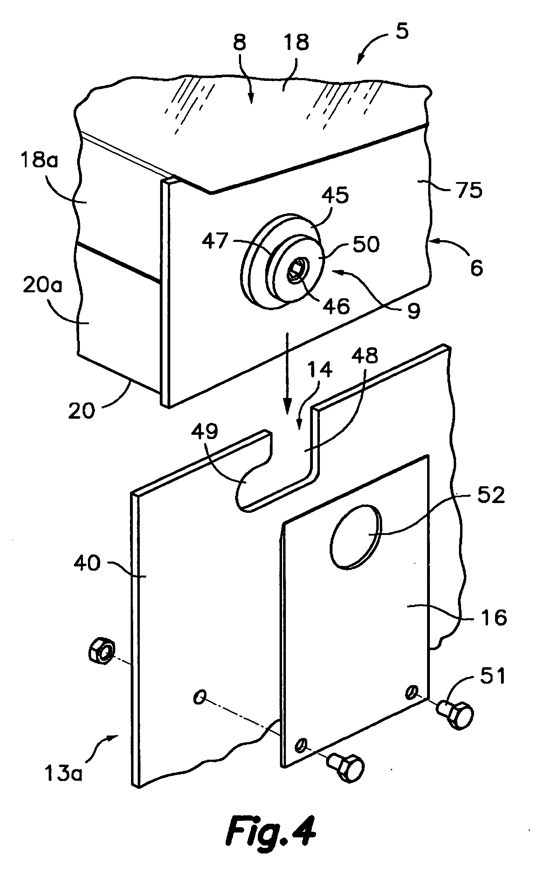

In the embodiment shown in Figure 1, the supporting profiles 13a, 13b, 13c are arranged mutually parallel and transverse to the direction of said linear foci F, i.e., transverse to the longitudinal direction DL. The frames 6 of the reflector-concentrator modules 5 of each transverse row are fixed at their opposite ends to two of said supporting profiles 13a, 13b, 13c. To that end, the frame 6 of each reflector-concentrator module 5 comprises first module positioning configurations 9 (best shown in Figure 4) cooperating with second module positioning configurations 14 provided in said supporting profiles 13a, 13b, 13c in order to position each reflector-concentrator module 5, and accordingly the corresponding reflective surface portions 8, in a predetermined operative position in relation to the supporting profiles 13a, 13b, 13c.

Figure 3 shows three different types of supporting profiles 13a, 13b, 13c which, together with the frames 6 of the reflector-concentrator modules 5, form the stationary structure 21 of the concentrator-collector device. In the embodiment shown in Figure 1, the stationary structure 21 comprises two first supporting profiles 13a and a second supporting profile 13b, each of which is arranged between two adjacent transverse rows of reflector-concentrator modules 5. Both the first supporting profiles 13a and the second supporting profile 13b have the shape of a channel open at the top defining a pair of facing upright walls 40 in which the corresponding second module positioning configurations 14 are provided. In the first supporting profiles 13a, the two facing upright walls 40 extend from side edges of a bottom wall 41 and are significantly separated in order to allow housing the base bodies 10 of the tracking mechanism 4 between the same. In the second supporting profile 13b, the two upright walls 40 are much closer and leave just enough space between them to allow fixing the reflector-concentrator modules 5. The stationary structure 21 furthermore comprises two third supporting profiles 13c arranged next to the outer ends of each of the two transverse rows of reflector-concentrator modules 5 located at the longitudinal ends of the stationary structure 21. Each of said third supporting profiles 13c has an angular shape with a single upright wall 40 in which the corresponding second module positioning configurations 14 are formed.

Alternatively, the stationary structure can comprise a different number of supporting profiles, and/or the supporting profiles can be configured differently from that shown, and/or can be arranged parallel to the longitudinal direction DL or forming a grid, with corresponding adaptations of the frames 6 of the reflector-concentrator modules 5.

In relation to Figures 4 to 6 an embodiment of the first and second module positioning configurations 9, 14 is now described. The first module positioning configurations 9 are fixed in the opposite end plates 75 of the frame 6 of the reflector-concentrator module 5, each of which comprises a cylindrical portion 42 (Figure 5) tightly inserted through a hole 43 formed in the corresponding end plate 75 and socket-coupled in the inner cavity of an end of a tubular member of the frame 6. The first module positioning configuration 9 has a widened outer portion 45 which is supported against an outer surface of the end plate 16 around said hole 43, and an axial hole through which a screw 46 is installed that serves to fix the first module positioning configuration 9 to the frame 6 and optionally to join the end plates 75 to the internal longitudinal connection members 76 of the frame 6. The first module positioning configuration 9 comprises a groove 47 formed in an outer portion thereof. The second module positioning configuration 14 formed in the upright wall 40 of the corresponding supporting profile 13a, 13b, 13c is in the form of an L-shaped slot defining a vertical portion 48 open at an upper edge of the upright wall 40 and a blind horizontal portion 49. The mentioned groove 47 of the first module positioning configuration 9 is sized to be introduced vertically downwards in said vertical portion 48 of the second module positioning configuration 14 and then horizontally shifted by said horizontal portion 49 until it abuts with the blind bottom thereof, which determines the operative position of the reflector-concentrator module 5 in relation to the corresponding supporting profile 13a, 13b, 13c. In this operative position, a head 50 of the second module positioning configuration 14 protrudes from the opposite side of the upright wall 40.

The supporting profiles 13a, 13b, 13c furthermore comprise retaining members 16 associated with said second module positioning configurations 14 having the function of immobilizing the first module positioning configurations 9 with respect to the second module positioning configurations 14. In the embodiment shown, each of said retaining members 16 comprises a plate made of a resistant and slightly elastic material having a first end spaced from the corresponding module positioning configuration 14 and a second opposite end superimposed on the second module positioning configuration 14. The mentioned first end of the retaining member 16 is fixed to the upright wall 40 of the supporting profile 13a, 13b, 13c, for example, by means of screws 51, and a hole 52 having a diameter that is equivalent to the diameter of the head 50 of the first module positioning configuration 9 is formed in the second end. The mentioned hole 52 of the retaining member 16 is centered with the position that the head 50 of the first module positioning configuration 9 will adopt when it is in the operative position. Thus, by elastically deforming the retaining member, for example, with a finger, as is shown in Figure 5, the first module positioning configuration 9 of the reflector-concentrator module 5 can be inserted in or extracted from the second module positioning configuration 14.

However, when the head 50 of the first module positioning configuration 9 is in the operative position in relation to the second module positioning configuration 14 of the supporting profile 13a, 13b, 13c, releasing the retaining member 16 causes an elastic recovery thereof and the head 50 of the first module positioning configuration 9 is trapped by the hole 52 of the retaining member 16, such that the first module positioning configuration 9 is immobilized with respect to the second module positioning configuration 14, as is shown in Figure 6. At least two pairs of first and second module positioning configurations 9, 14 are obviously necessary for immobilizing the reflector-concentrator module 5 with respect to each of the supporting profiles 13a, 13b, 13c. Thus, the coupling of the first and second module positioning configurations 9, 14 and the action by elastic deformation of the retaining members 16 can be performed *in situ* in a quick and easy manner without needing to use tools and with a guarantee in the correct operative position of the reflective surface portions 8 in relation to the supporting profiles 13a, 13b, 13c of the stationary structure 21. In the installed solar energy concentrator-collector device, the supporting profiles 13a, 13b, 13c of the stationary structure 21 will preferably rest on a planar surface or on supporting elements defining a plane, which can be horizontal or inclined. The solar energy concentrator-collector device of the present invention is provided for being installed, for example, on a roof or roofing of a building, although it can likewise be installed in any other suitable location.

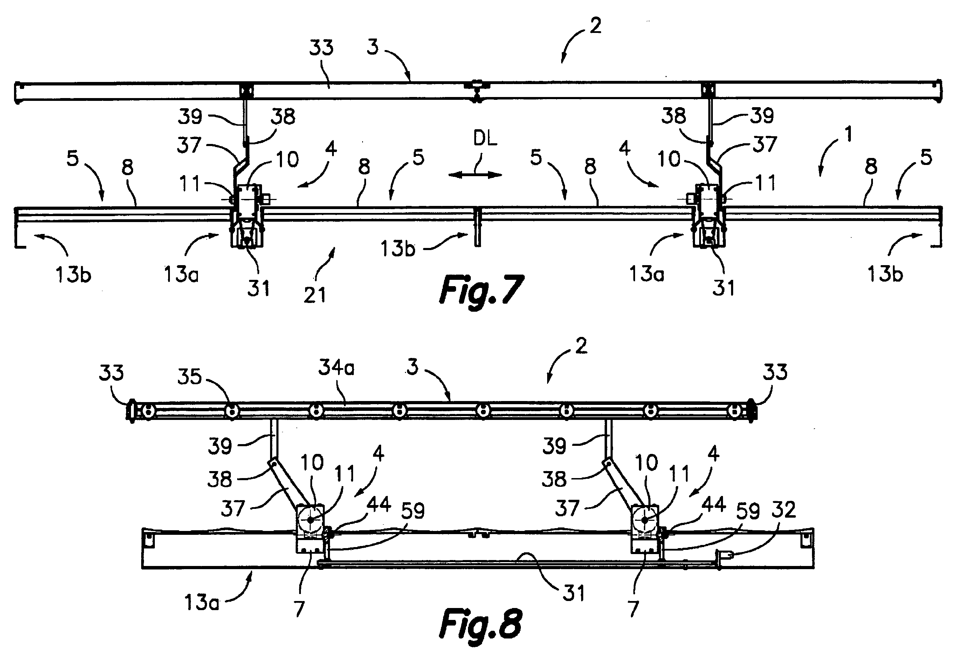

In relation to Figures 7 to 9, the installation and the operation of the tracking mechanism 4 are now described. As described above, in the embodiment shown the tracking mechanism 4 comprises four base bodies 10, two of them installed in each of the two first supporting profiles 13a of the stationary structure 21. Each base body 10 of the tracking mechanism 4 is a reducer gearbox, including, for example, a worm gear, having an output shaft which functions like the mentioned supporting shaft 11 and an input shaft 44 which is connected by movement transmission means to the output shaft of a drive motor 32 assembled in the corresponding first supporting profile 13a. Advantageously, the respective input shafts 44 of the two base bodies 10 which are installed in one and the same first supporting profile 13a (Figure 8) are connected by respective movement transmission means to a common drive shaft 31 installed along the first supporting profile 13a and coupled to the output shaft of a single drive motor 32 assembled in the first supporting profile 13a.

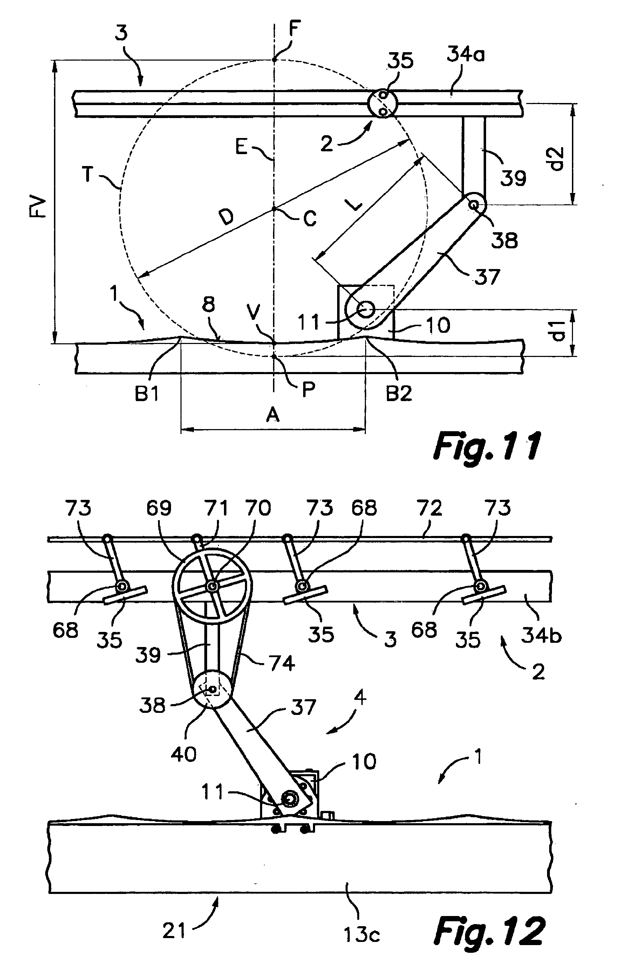

In the embodiment shown, the base bodies 10 of the tracking mechanism 4 are arranged such that their supporting shafts 11 are parallel to the longitudinal direction. Each supporting shaft 11 is fixedly connected to a first end of a pivoting arm 37, which has a second end connected by means of a hinge pin 38 to a corresponding leg 39 which extends downwards from the mobile structure 3. The mentioned legs 39 are rigidly joined to the mobile structure 3, whereby the stationary structure 21, the mentioned pivoting arms 37 and the mobile structure 3 function like an articulated parallelogram for guiding the movement of all the receptor elements 35 of the mobile receiver 2 in unison with respect to their respective reflective surfaces along a circular path T, which will be described below in relation to Figure 11.

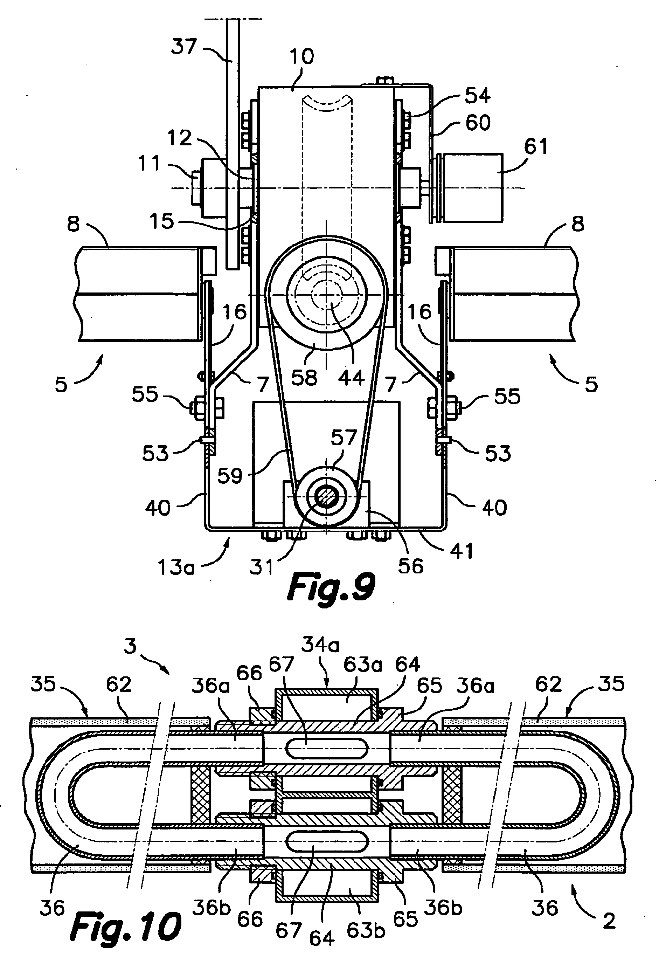

The detail of Figure 9 shows one of the base bodies 10 of the tracking mechanism 4 connected to the corresponding first supporting profile 13a by means of a pair of auxiliary parts 7. The base body 10 comprises first receiver positioning configurations 12 precisely positioned with respect to said supporting shaft 11, for example, in the form of circular projections formed in the wall of the base body 10 around the supporting shaft 11. The mentioned auxiliary parts 7 comprise second receiver positioning configurations 15, for example in the form of holes in which the first receiver positioning configurations 12 are tightly inserted. In turn, respective facing holes through which positioning pins 53 are inserted are formed in the auxiliary parts 7 and in the upright walls 40 of the first supporting profile 13a. Thus, the second receiver positioning configurations 15 formed in the auxiliary parts 7 are precisely positioned with respect to the second module positioning configurations 14 formed in the supporting profile 13a. The auxiliary parts 7 are fixed to the base body 10 and to the upright walls 40 of the first supporting profile 13a by means of respective screws 54, 55, for example, and the first receiver positioning configurations 12 cooperate with the second receiver positioning configurations 15 in order to position each base body 10 in a predetermined operative position in relation to the corresponding supporting profile 13a and thereby assure a predetermined degree of precision for the path of the mobile receiver 2 in relation to said stationary reflector-concentrator 1 guided and driven by the tracking mechanism 4.

It will be understood that the positioning configurations between the base body 10 and the first supporting profile 13a could alternatively have shapes different to those shown, and that the auxiliary parts 7 could be omitted or replaced with appendages of the base body 10 and/or of the first supporting profile 13a without departing from the scope of the present invention.

Figure 9 also shows the movement transmission means between the drive shaft 31, which is installed in bearing blocks 56 fixed to the bottom wall 51 of the first supporting profile 13a, and the input shaft 44 of the gear reducer of the base body 10. The movement transmission means comprise a driving pulley 57 fixed to the drive shaft 31, a driven pulley 58 fixed to the input shaft 44 and a belt 59 installed around the driving and driven pulleys 57, 58. In addition, a support 60 is fixed on the base body 10, on which support 60 an angular position detector 61 associated with the supporting shaft 11 is assembled. The angular position detector 61 can be used in an electronic control of the drive of the tracking mechanism 4. Advantageously, the supporting bodies 10, the components of the movement transmission means, the corresponding drive motor 32 and other related accessories can be installed in each first supporting profile 13a in a prior manufacturing phase and supplied as an assembly to facilitate their quick installation *in situ.*

An example of the construction of the mobile structure 3 is described below in relation to Figure 10. As has been mentioned above, the mobile structure 3 supporting the mobile receiver 2 is formed by a grid made up of longitudinal profiles 33 and transverse profiles 34a, 34b, and the receptor elements 35 are supported at their ends between every two of the transverse profiles 34a, 34b. In the embodiment shown, the concentrator-collector device is aimed at using thermal energy of the sun's rays to heat a heat-transfer fluid, such as, for example, water. To that end, each of the receptor elements 35 comprises a receptor tube 36 through which the mentioned heat-transfer fluid circulates, with an inlet end 36a and an outlet end 36b connected and communicated with a circuit for the heat-transfer fluid. In the embodiment shown, each receptor element comprises, as is conventional, a transparent tubular cover 62, for example, of glass, inside which the mentioned receptor tube 36 is arranged. The receptor tube 36 of each receptor element 35 is bent such that it has inlet and outlet ends 36a, 36b protruding from one and the same end of the transparent tubular cover 62 of the receptor element 35. Several of the transverse profiles 34a of the mobile structure 3 are sections having a closed cross-section forming two parallel ducts which function, respectively, like a supply duct 63a and a return duct 63b in connection with said circuit for the heat-transfer fluid. The inlet and outlet ends 36a, 36b of each receptor tube 36 are connected and communicated respectively with said supply and return ducts 63a, 63b formed by one of the transverse profiles 34a.

Momentarily referring to Figure 1, in the grid forming the mobile structure 3 there are three merely structural transverse profiles 34b supporting the blind ends of the receptor elements 35 and two transverse profiles 34a, intercalated between them, which perform structural functions supporting the connection ends of the receptor elements 35 while at the same time they provide the supply and return ducts 63a, 63b to which the inlet and outlet ends 36a, 36b of the receptor tubes 36 of the receptor elements 35 are connected and communicated. With this arrangement, each transverse profile 34a forming the supply and return ducts 63a, 63b receives the connection of receptor elements 35 from two opposite sides of the same.

Returning to Figure 10, an arrangement for the quick and easy connection of the inlet and outlet ends 36a, 36b of the each receptor tube 36 to the supply and return ducts 63a, 63b from opposite sides of the transverse profile 34a is furthermore shown therein. Each of the supply and return ducts 63a, 63b is traversed by a connecting sleeve 64 passed through a pair of aligned holes formed in facing walls of the transverse profile 34a and fixed to the transverse profile 34a, for example, by means of a widened head 65 and a nut 66 coupled to a threaded outer portion thereof. The mentioned connecting sleeve 64 is traversed from end to end by a passage having an opening 67 in communication with the corresponding supply or return duct 63a, 63b, and opposite ends of said passage are sized to receive by socket-coupling corresponding inlet or outlet ends 36a, 36b of the receptor tubes 36 of two of the receptor elements 35 located in opposite sides of the transverse profile 34a. Thus, the connecting sleeves function like supporting members of the receptor elements 32 and like connections for the flow of the heat-transfer fluid. At one of the ends of the transverse profile 34a, the supply and return ducts 63a, 63b are connected to the circuit of the heat-transfer fluid by means of flexible tubes (not shown).

Alternatively, the inlet and outlet ends 36a, 36b of the receptor tubes 36 can be connected to respective supply and return ducts 63a, 63b formed in two different transverse profiles 34a arranged next to one another. According to another alternative embodiment, not shown, the receptor tube 36 of each receptor element 35 is rectilinear and has the inlet and outlet ends 36a, 36b protruding from opposite ends of the transparent tubular cover 62, in which case the inlet and outlet ends 36a, 36b of each receptor tube 36 will be connected to respective supply and return ducts 63a, 63b formed in two different transverse profiles 34a arranged next to opposite ends of the receptor element 35.

Now making reference to Figure 11, each reflective surface portion 8 of the reflector-concentrator module 5 defines a ruled concave surface having a substantially parabolic cross-section. The parabolic cross-section of the reflective surface portion 8 has two side edges B1, B2, a parabola vertex V centered between said side edges B1, B2, a parabola axis E and a parabola focus F coinciding with the mentioned linear focus. The tracking mechanism 4 is configured and arranged in order to support and move the mobile structure 3 such that each of the receptor elements 35 of the mobile receiver 2 describes a circular path T which passes through said parabola focus F, and having a center C on said parabola axis E, a lower point P in the lower intersection of the path T with the parabola axis E, and a diameter D slightly greater than a distance FV between the parabola focus F and the mentioned parabola vertex V. The ratio of the mentioned diameter D of the circular path T with respect to said distance FV between the parabola focus F and the parabola vertex V is preferably within the range 1<D/FV≤1.10. The mentioned side edges B1, B2 of the reflective surface portion 8 are separated from one another by a distance A, and the ratio of said distance A with respect to the diameter D of the circular path T is preferably in the range of 1:0.9 to 1:2.0.

It will be observed from Figure 11 that the center C of the circular path T is at a significant height above the reflective surface portion 8, which would be a drawback if positioning the supporting shaft 11 of the base body 10 aligned with the center C was desired because very high supports anchored in the first transverse profile 13a and very long movement transmission means for transmitting the movement from the drive shaft 31 to the input shaft 44 of the base body 10 would be required. For this reason, the supporting shaft 11 of each base body 10 is shifted downwards and/or towards a side with respect to the center C of any of the circular paths T, preferably close to one of the side edges B1, B2 of the reflective surface portion 8, or more specifically, close to where the side edges B1, B2 of two adjacent reflective surface portions 8 come together. The supporting shaft 11 of each base body 10 is fixedly connected to a pivoting arm 37 the distal end of which is connected by means of a hinge pin 38 to a leg 39 which extends downwards from the mobile structure 3. Each pivoting arm 37 has a length L between the supporting shaft 11 and said hinge pin 38, and said length L is equal to the radius of the circular path T, or in other words, equal to half the diameter D of the circular path T. In addition, the sum of a first normal distance d1 between said lower point P of the circular path T and the supporting shaft 11 and a second normal distance d2 between the hinge pin 38 and a central line L of the receptor element 35 is also equal to the radius of the circular path T, or in other words, equal to the other half of the diameter D of the circular path T. By fulfilling these ratios, the circular path T will always be centered in the center C no matter what the position of the supporting shaft 11. If the supporting shaft 11 was located at a lower level than the lower point P of the circular path T, the first normal distance d1 would have a negative sign.

Figure 12 shows another alternative embodiment of the solar energy concentrator-collector device of the present invention, in which the receptor elements 35 are, for example, photovoltaic receivers having an essentially planar configuration, which are more sensitive to the direction of the rays collected by the thermal energy receptor elements. Here, each of the receptor elements 35 is rotationally supported at its ends such that it can rotate about a longitudinal axis 68, and several of the receptor elements 35 are connected by movement transmission means to a driving pulley 40 centered in the hinge pin 38 and fixedly joined to the pivoting arm 37. In one of the transverse profiles 37b of the mobile structure 3, which here are all merely structural sections, a driven pulley 69 is assembled which can rotate with respect to a shaft 70 parallel to the longitudinal shafts 68 and located in one and the same plane as the same. An arm 71 integral with the driven pulley 69 is hingedly connected to a transmission rod 72, which in turn is hingedly connected with a series of arms 73 integral with the receptor element 35. A belt 74 or the like is installed encircling arcs of the driving and driven pulleys 40, 69, such that a rotation of the pivoting arm 37 around the supporting shaft 11 is transmitted to the receptor elements 37 causing a rotation thereof around their respective longitudinal shafts 68. A transmission ratio between said driving pulley 40 and the receptor elements 35 of 1:2, in which the receptor elements 35 rotate at half the rotational speed of the pivoting arm 37, assures that the receptor elements 35 adopt at all times a suitable position for receiving the reflected rays at angles that are as close as possible to the perpendicular. This construction can obviously be applied to a concentrator-collector device using thermal energy collecting elements associated with a circuit for a heat-transfer fluid, for example such as those described above in relation to Figures 1 to 10 or other similar ones.

According to another embodiment not shown, the concentrator-collector device of the present invention comprises a stationary reflector-concentrator 1 in which the reflective surface portions 8 are located at a higher level with respect to upper edges of the supporting profiles 13a, 13b, 13c, and the base bodies 10 are located in alignment with the confluence of two adjacent reflective surface portions 8, such that there are substantially no impediments along the longitudinal rows of aligned reflective surface portions 8. The concentrator-collector device furthermore comprises an automatic cleaning device based on a mechanism configured and arranged for shifting cleaning elements, such as brushes, cloths or the like, along the longitudinal direction of the reflective surfaces in cooperation with a cleaning liquid sprayed, for example, from strategically located nozzles connected to a cleaning liquid circuit.

A person skilled in the art will be able to make modifications and variations from the embodiments shown and described without departing from the scope of the present invention as it is defined in the attached claims.

## Claims

1. A solar energy concentrator-collector device, of the type comprising:
a stationary reflector-concentrator (1) with a plurality of elongated concave reflective surface portions (8), each configured to reflect the sun's rays and concentrate them in a linear focus parallel to a longitudinal direction, said reflective surface portions (8) being arranged parallel next to one another and joined to a stationary structure (21);
a mobile receiver (2) with a plurality of elongated receptor elements (35) arranged parallel to the direction of said linear foci (F) and joined to a mobile structure (3); and
a tracking mechanism (4) connected to said stationary structure (21) and to said mobile structure (3) in order to support and move the mobile structure (3) on said stationary reflector-concentrator (1) in a path so that said receptor elements (35) follow the maximum confluence of the sun's rays reflected by the reflective surfaces as the relative position of the sun changes;
**characterized in that**:
each reflective surface portion (8) substantially has the shape of a ruled surface having a parabola vertex (V), a parabola axis (E) and a parabola focus (F) coinciding with said linear focus, and the tracking mechanism (4) is arranged in order to support and move the mobile structure (3) such that each of the receptor elements (35) of the mobile receiver (2) describes a circular path (T) which passes through said parabola focus (F), and which has a center (C) on said parabola axis (E), a lower point (P) in the lower intersection with the parabola axis (E), and a diameter (D) greater than the distance (FV) between the parabola focus (F) and said parabola vertex (V), wherein the ratio of said diameter (D) with respect to said distance (FV) is within the range 1<D/FV≤1.10.

2. The device according to claim 1, **characterized in that** the reflective surface portion (8) has two side edges (B1, B2), said parabola vertex (V) is centered between said side edges (B1, B2), and the ratio of a distance (A) between the side edges (B1, B2) of each reflective surface portion (8) with respect to the diameter (D) of the circular path (T) is in the range of 1:0.9 to 1:2.0.

3. The device according to claim 1, **characterized in that** the stationary reflector-concentrator (1) includes a plurality of reflector-concentrator modules (5) arranged forming a matrix of longitudinal and transverse rows, each of said reflector-concentrator modules (5) comprising a frame (6) to which at least one upper element (18) carrying at least one reflective surface portion (8) is fixed, wherein the stationary structure (21) is formed by said frames (6) of the reflector-concentrator modules (5) and by a plurality of supporting profiles (13a, 13b, 13c), where the frames (6) of the reflector-concentrator modules (5) of each row are fixed at opposite ends or sides to at least two of said supporting profiles (13a, 13b, 13c).

4. The device according to claim 3, **characterized in that** said tracking mechanism (4) comprises at least three base bodies (10) fixed to at least two of the supporting profiles (13a), and each of said base bodies (10) rotationally supports at least one supporting shaft (11) on which a pivoting arm (37) connected to the mobile structure (3) for guiding the movements of the mobile structure (3) is assembled.

5. The device according to claim 3 or 4, **characterized in that** said upper element (18) carrying said reflective surface portion (8) of each reflector-concentrator module (5) is precisely positioned in a predetermined stable operative position in relation to the corresponding frame (6) and the frame (6) of each reflector-concentrator module (5) comprises first module positioning configurations (9) cooperating with second module positioning configurations (14) provided in said supporting profiles (13a, 13b, 13c) in order to position each reflector-concentrator module (5) and with it the corresponding reflective surface portion (8) in a predetermined operative position in relation to the supporting profiles (13a, 13b, 13c).

6. The device according to claim 5, **characterized in that** the supporting profiles (13a, 13b, 13c) comprise retaining members (16) associated with said second module positioning configurations (14) and capable of immobilizing said first module positioning configurations (9) with respect to the second module positioning configurations (14).

7. The device according to claim 6, **characterized in that** said retaining members (16) are capable of a quick action by elastic deformation.

8. The device according to claim 5, **characterized in that** each base body (10) of the tracking mechanism (4) comprises first receiver positioning configurations (12) precisely positioned with respect to said supporting shaft (11), and the corresponding supporting profiles (13a), or auxiliary parts (7) fixed thereto, comprise second receiver positioning configurations (15) precisely positioned with respect to said second module positioning configurations (14), said first receiver positioning configurations (12) cooperating with said second receiver positioning configurations (15) in order to position each base body (10) in a predetermined operative position in relation to the corresponding supporting profile (13a) and thereby assuring a predetermined degree of precision for said path of the mobile receiver (2) in relation to said stationary reflector-concentrator (1).

9. The device according to claim 8, **characterized in that** the supporting profiles (13a, 13b, 13c) are arranged transverse to the direction of said linear foci (F) and the frames (6) of the reflector-concentrator modules (5) of each transverse row are fixed at their opposite ends to two of said supporting profiles (13a, 13b, 13c).

10. The device according to claim 9, **characterized in that** the plurality of supporting profiles (13a, 13b, 13c) comprises at least two first supporting profiles (13a) and at least one second supporting profile (13b), each arranged between two adjacent transverse rows of reflector-concentrator modules (5), where each of said first and second supporting profiles (13a, 13b) has a pair of facing upright walls (40) in which the corresponding second module positioning configurations (14) are provided, wherein each of said first supporting profiles (13a) has a channel shape open at the top where said pair of facing upright walls (40) extend from side edges of a bottom wall (41), and wherein the plurality of supporting profiles (13a, 13b, 13c) furthermore comprises two third supporting profiles (13c) arranged next to the outer ends of each of the end transverse rows of reflector-concentrator modules (5), where each of said third supporting profiles (13c) has an upright wall (40) in which the corresponding second module positioning configurations (14) are formed.

11. The device according to claim 10, **characterized in that** each base body (10) of the tracking mechanism (4) is a reducer gearbox the output shaft of which is said supporting shaft (11) and the input shaft (44) of which is connected by movement transmission means to the output shaft of a drive motor (32) assembled in the corresponding first supporting profile (13a).

12. The device according to claim 11, **characterized in that** at least two of the base bodies (10) of the tracking mechanism (4) are installed in one and the same first supporting profile (13a) and their respective input shafts (44) are connected by respective movement transmission means to a single drive shaft (31) installed along the first supporting profile (13a) and coupled to the output shaft of a single drive motor (32) assembled in the first supporting profile (13a).

13. The device according to claim 12, **characterized in that** the supporting shaft (11) of each base body (10) is parallel to the longitudinal direction and is fixedly connected to a first end of a pivoting arm (37), which has a second end connected by a hinge pin (38) to a corresponding leg (39) which extends downwards from the mobile structure (3), the stationary structure (21), said pivoting arms (37) and the mobile structure (3) functioning like an articulated parallelogram for guiding the movement of all the receptor elements (35) of the mobile receiver (2) in unison with respect to their respective reflective surfaces along a circular path (T), wherein each pivoting arm (37) has a length (L) between the supporting shaft (11) and said hinge pin (38) that is equal to half of said diameter (D) of the circular path (T), and the sum of a first normal distance (d1) between said lower point (P) of the circular path (T) and the supporting shaft (11) and a second normal distance (d2) between the hinge pin (38) and a central line (L) of the receptor element (35) is equal to said half of the diameter (D) of the circular path (T), and wherein the supporting shaft (11) of each base body (10) is shifted downwards and/or towards a side with respect to the center (C) of any of the circular paths (T).

14. The device according to claim 1, **characterized in that** the mobile structure (3) comprises a plurality of longitudinal profiles (33) and transverse profiles (34a, 34b) connected to one another forming a grid, and said receptor elements (35) are supported at their ends between every two of said transverse profiles (34a, 34b), wherein each of said receptor elements (35) comprises at least one receptor tube (36) for a heat-transfer fluid, with an inlet end (36a) and an outlet end (36b) connected and communicated with a circuit for said heat-transfer fluid, and wherein at least one of said transverse profiles (34a) of the mobile structure (3) is a profile having a closed cross-section forming a supply duct (63a) or a return duct (63b) of said circuit for the heat-transfer fluid, and at least one of said inlet and outlet ends (36a, 36b) of each receptor tube (36) is connected and communicated with a respective duct of said supply and return ducts (63a, 63b) formed by the transverse profile (34a).

## Patentansprüche

1. Sonnenenergiekonzentrator/-kollektorvorrichtung, der Art umfassend:
einen stationären Reflektor-Konzentrator (1) mit einer Vielzahl von länglichen konkaven reflektierenden Oberflächenteilen (8), wobei jeder dazu ausgebildet ist,
die Sonnenstrahlen zu reflektieren und diese in einen linearen Brennpunkt parallel zu einer longitudinalen Richtung zu konzentrieren, wobei die genannten reflektierenden Oberflächenteile parallel nebeneinander angeordnet und mit einer stationären Struktur (21) verbunden sind;
einen mobilen Empfänger (2) mit einer Vielzahl von länglichen Empfangselementen (35), welche parallel zur Richtung der genannten linearen Brennpunkten (F) angeordnet und mit einer mobilen Struktur (3) verbunden sind;
und
einen Nachführmechanismus (4), welcher mit der genannten stationären Struktur (21) und mit der genannten mobilen Struktur (3) verbunden ist, um die mobile Struktur (3) auf dem genannten stationären Reflektor-Konzentrator (1) auf einem Weg zu tragen und bewegen, so dass die genannten Empfangselemente (35) die maximale Konfluenz der Sonnenstrahlen folgen, welche von den reflektierenden Oberflächen reflektiert werden, während sich die relative Stellung der Sonne ändert;
**dadurch gekennzeichnet, dass**:
jeder reflektierende Oberflächenteil (8) im Wesentlichen die Form einer Regelfläche aufweist, welche einen Parabelscheitelpunkt (V), eine Parabelachse (E) und einen Parabelbrennpunkt (F), welcher mit dem genannten linearen Brennpunkt zusammenfällt, aufweist, und der Nachführmechanismus (4) dazu angeordnet ist, die mobile Struktur (3) zu tragen und bewegen, so dass jeder der Empfangselemente (35) des mobilen Empfängers (2) einen kreisförmigen Weg (T) beschreibt, welcher durch den genannten Parabelbrennpunkt (F) geht, und welcher einen Mittelpunkt (C) auf der genannten Parabelachse (E), einen unteren Punkt (P) in dem unteren Schnittpunkt mit der Parabelachse (E) und einen Durchmesser (D), welcher größer als der Abstand (FV) zwischen dem Parabelbrennpunkt (F) und dem genannten Parabelscheitelpunkt (V) ist, aufweist, wobei sich das Verhältnis des genannten Durchmessers (D) in Bezug auf den genannten Abstand (FV) im Bereich von 1<D/FV≤1,10 befindet.

2. Vorrichtung nach Anspruch 1, **dadurch gekennzeichnet, dass** der reflektierende Oberflächenteil (8) zwei seitliche Ränder (B1, B2) aufweist, der genannte Parabelscheitelpunkt (V) zwischen den genannten seitlichen Rändern (B1, B2) zentriert ist und sich das Verhältnis eines Abstands (A) zwischen den seitlichen Rändern (B1, B2) von jedem reflektierenden Oberflächenteil (8) in Bezug auf den Durchmesser (D) des kreisförmigen Wegs (T) im Bereich von 1:0,9 zu 1:2,0 befindet.

3. Vorrichtung nach Anspruch 1, **dadurch gekennzeichnet, dass** der stationäre Reflektor-Konzentrator (1) eine Vielzahl von Reflektor-Konzentratormodulen (5) aufweist, welche so angeordnet sind, dass sie eine Matrix von longitudinalen und transversalen Reihen bilden, wobei jeder der genannten Reflektor-Konzentratormodule (5) einen Rahmen (6) umfasst, an welchem zumindest ein oberes Element (18) befestigt ist, das zumindest einen reflektierenden Oberflächenteil (8) trägt, wobei die stationäre Struktur (21) von den genannten Rahmen (6) der Reflektor-Konzentratormodule (5) und von einer Vielzahl von Tragprofilen (13a, 13b, 13c) gebildet ist, wobei die Rahmen (6) der Reflektor-Konzentratormodule (5) jeder Reihe auf entgegengesetzten Enden oder Seiten an zumindest zwei der genannten Tragprofile (13a, 13b, 13c) befestigt sind.

4. Vorrichtung nach Anspruch 3, **dadurch gekennzeichnet, dass** der genannte Nachführmechanismus (4) zumindest drei Grundkörper (10) umfasst, welche an zumindest zwei der Tragprofile (13a) befestigt sind, und jeder der genannten Grundkörper (10) zumindest eine Tragwelle (11) drehbar trägt, auf welcher ein Schwenkarm (37) montiert ist, welcher mit der mobilen Struktur (3) für die Führung der Bewegungen der mobilen Struktur (3) verbunden ist.

5. Vorrichtung nach Anspruch 3 oder 4, **dadurch gekennzeichnet, dass** das genannte obere Element (18), welches den genannten reflektierenden Oberflächenteil (8) von jedem Reflektor-Konzentratormodul (5) trägt, in einer vorbestimmten stabilen Betriebsposition in Bezug auf den entsprechenden Rahmen (6) genau positioniert ist, und der Rahmen (6) von jedem Reflektor-Konzentratormodul (5) erste Modulpositionierungsausbildungen (9), welche mit zweiten Modulpositionierungsausbildungen (14) zusammenarbeiten, umfasst, die in den genannten Tragprofilen (13a, 13b, 13c) vorgesehen sind, um jeden Reflektor-Konzentratormodul (5) und damit den entsprechenden reflektierenden Oberflächenteil (8) in einer vorbestimmten Betriebsposition in Bezug auf die Tragprofile (13a, 13b, 13c) zu positionieren.

6. Vorrichtung nach Anspruch 5, **dadurch gekennzeichnet, dass** die Tragprofile (13a, 13b, 13c) Halteelemente (16) umfassen, welche mit den genannten zweiten Modulpositionierungsausbildungen (14) verbunden sind und die genannten ersten Modulpositionierungsausbildungen (9) in Bezug auf die zweiten Modulpositionierungsausbildungen (14) feststellen können.

7. Vorrichtung nach Anspruch 6, **dadurch gekennzeichnet, dass** die genannten Halteelemente (16) eine schnelle Betätigung durch elastische Verformung durchführen können.

8. Vorrichtung nach Anspruch 5, **dadurch gekennzeichnet, dass** jeder Grundkörper (10) des Nachführmechanismus (4) erste Empfängerpositionierungsausbildungen (12) umfasst, welche in Bezug auf die genannte Tragwelle (11) genau positioniert sind, und die entsprechende Tragprofile (13a), oder an denselben befestigten Hilfsteile (7), zweite Empfängerpositionierungsausbildungen (15) umfassen, welche in Bezug auf die genannten zweiten Modulpositionierungsausbildungen (14) genau positioniert sind, wobei die genannten ersten Empfängerpositionierungsausbildungen (12) mit den genannten zweiten Empfängerpositionierungsausbildungen (15) zusammenarbeiten, um jeden Grundkörper (10) in einer vorbestimmten Betriebsposition in Bezug auf die entsprechenden Tragprofile (13a) zu positionieren, und damit einen vorbestimmten Genauigkeitsgrad für den genannten Weg des mobilen Empfängers (2) in Bezug auf den genannten stationären Reflektor-Konzentrator (1) gewährleisten.

9. Vorrichtung nach Anspruch 8, **dadurch gekennzeichnet, dass** die Tragprofile (13a, 13b, 13c) transversal zur Richtung der genannten linearen Brennpunkte (F) angeordnet sind und die Rahmen (6) der Reflektor-Konzentratormodule (5) jeder transversalen Reihe an ihren entgegengesetzten Enden an zwei der genannten Tragprofile (13a, 13b, 13c) befestigt sind.

10. Vorrichtung nach Anspruch 9, **dadurch gekennzeichnet, dass** die Vielzahl an Tragprofile (13a, 13b, 13c) zumindest zwei erste Tragprofile (13a) und zumindest einen zweiten Tragprofil (13b) umfasst, wobei jeder zwischen zwei benachbarten transversalen Reihen von Reflektor-Konzentratormodulen (5) angeordnet ist, wobei jeder der genannten ersten und zweiten Tragprofile (13a, 13b) ein Paar von gegenübergestellten aufrechten Wänden (40) aufweist, in welchen die entsprechenden zweiten Modulpositionierungsausbildungen (14) vorgesehen sind, wobei jeder der genannten ersten Tragprofile (13a) eine Kanalform, welche oben offen ist, aufweist, wobei sich das Paar von gegenübergestellten aufrechten Wänden (40) von seitlichen Rändern einer unteren Wand (41) aus erstrecken und wobei die Vielzahl an Tragprofile (13a, 13b, 13c) zusätzlich zwei dritte Tragprofile (13c) umfasst, welche neben den äußeren Enden jeder der transversalen Endreihen von Reflektor-Konzentratormodulen (5) angeordnet sind, wobei jeder der genannten dritten Tragprofile (13c) eine aufrechte Wand (40) aufweist, in welcher die entsprechenden zweiten Modulpositionierungsausbildungen (14) gebildet sind.

11. Vorrichtung nach Anspruch 10, **dadurch gekennzeichnet, dass** jeder Grundkörper (10) des Nachführmechanismus (4) ein Untersetzungsgetriebegehäuse ist, dessen Abtriebswelle die genannte Tragwelle (11) ist und dessen Antriebswelle (44) durch Bewegungsübertragungsmittel mit der Abtriebswelle eines Antriebsmotors (32) verbunden ist, welcher in dem entsprechenden ersten Tragprofil (13a) montiert ist.

12. Vorrichtung nach Anspruch 11, **dadurch gekennzeichnet, dass** zumindest zwei der Grundkörper (10) des Nachführmechanismus (4) in demselben ersten Tragprofil (13a) installiert sind und ihre jeweiligen Antriebswellen (44) durch jeweilige Bewegungsübertragungsmittel mit einer einzigen Getriebewelle (31) verbunden sind, welche entlang des ersten Tragprofils (13a) installiert ist und mit der Abtriebswelle eines einzigen Antriebsmotors (32), welcher in dem ersten Tragprofil (13a) montiert ist, gekoppelt ist.

13. Vorrichtung nach Anspruch 12, **dadurch gekennzeichnet, dass** die Tragwelle (11) jedes Grundkörpers (10) parallel zur longitudinalen Richtung ist und mit einem ersten Ende eines Schwenkarms (37) fest verbunden ist, welcher ein zweites Ende aufweist, das durch einen Gelenkbolzen (38) mit einem entsprechenden Fuß (39) verbunden ist, der sich von der mobilen Struktur (3) aus nach unten erstreckt, wobei die stationäre Struktur (21), die genannten Schwenkarme (37) und die mobile Struktur (3) wie ein Gelenkparallelogramm fungieren, um die Bewegung aller Empfangselemente (35) des mobilen Empfängers (2) in Bezug auf ihren jeweiligen reflektierenden Oberflächen entlang eines kreisförmigen Wegs (T) einstimmig zu führen, wobei jeder Schwenkarm (37) eine Länge (L) zwischen der Tragwelle (11) und dem genannten Gelenkbolzen (38) aufweist, die gleich der Hälfte des genannten Durchmessers (D) des kreisförmigen Wegs (T) ist, und die Summe eines ersten normalen Abstands (d1) zwischen dem genannten unteren Punkt (P) des kreisförmigen Wegs (T) und der Tragwelle (11) und eines zweiten normalen Abstands (d2) zwischen dem Gelenkbolzen (38) und einer zentralen Linie (L) des Empfangselements (35) gleich der genannten Hälfte des Durchmessers (D) des kreisförmigen Wegs (T) ist, und wobei die Tragwelle (11) jedes Grundkörpers (10) nach unten und/oder zu einer Seite in Bezug auf den Mittelpunkt (C) eines der kreisförmigen Wege (T) verschoben ist.

14. Vorrichtung nach Anspruch 1, **dadurch gekennzeichnet, dass** die mobile Struktur (3) eine Vielzahl von longitudinalen Profilen (33) und transversalen Profilen (34a, 34b) umfasst, welche unter Bildung eines Netzes miteinander verbunden sind, und die genannten Empfangselemente (35) an ihren Enden zwischen jeden zweiten der genannten transversalen Profile (34a, 34b) getragen werden, wobei jeder der genannten Empfangselemente (35) zumindest ein Empfangsrohr (36) für eine Wärmeübertragungsflüssigkeit umfasst, mit einem Eingangsende (36a) und einem Ausgangsende (36b) welche mit einem Kreislauf für die genannte Wärmeübertragungsflüssigkeit verbunden sind und mit diesem kommunizieren, und wobei zumindest eines der genannten transversalen Profile (34a) der mobilen Struktur (3) ein Profil ist, welches einen geschlossenen Querschnitt aufweist, der eine Versorgungsleitung (63a) oder eine Rückflussleitung (63b) des genannten Kreislaufs für die Wärmeübertragungsflüssigkeit bildet, und zumindest eines der genannten Eingangs- und Ausgangsenden (36a, 36b) jedes Empfangsrohrs (36) mit einer jeweiligen Leitung der genannten Versorgungs-und Rückflussleitungen (63a, 63b) verbunden ist, die das transversale Profil (34a) bildet, und mit dieser kommuniziert.

## Revendications

1. Un dispositif collecteur concentrateur d'énergie solaire, du genre comportant:
un concentrateur réflecteur stationnaire (1) ayant une pluralité de portions à surface réfléchissante concave allongée (8), chacune étant configurée pour réfléchir les rayons de soleil et les concentrer sur un foyer linéaire parallèle à une direction longitudinale, ces portions de surface réfléchissantes (8) étant agencées parallèles les unes à côté des autres et reliées à une structure stationnaire (21);
un récepteur mobile (2) ayant une pluralité d'éléments récepteurs allongés (35) agencés parallèles dans le sens de ces foyers linéaires (F) et reliés à une structure mobile (3); et
un mécanisme de suivi (4) relié à cette structure stationnaire (21) et à cette structure mobile (3) pour supporter et déplacer la structure mobile (3) sur ce concentrateur réflecteur stationnaire (1) dans une trajectoire de sorte que ces éléments récepteurs (35) suivent la confluence maximale des rayons de soleil réfléchis par les surfaces réfléchissantes lorsque la position relative du soleil change;
**caractérisé en ce que**:
chaque portion de surface réfléchissante (8) a sensiblement la forme d'une surface rayée ayant un sommet parabolique (V), un axe de parabolique (E) et un foyer parabolique (F) coïncidant avec ce foyer linéaire, et le mécanisme de suivi (4) est agencé pour supporter y déplacer la structure mobile (3) de sorte que chacun des éléments récepteurs (35) du récepteur mobile (2) décrive une trajectoire circulaire (T) passant à travers ce foyer parabolique (F) et possédant un centre (C) sur cet axe parabolique (E), un point inférieur (P) à l'intersection inférieure avec l'axe parabolique (E) et un diamètre (D) supérieur à la distance (FV) entre le foyer parabolique (F) et ce sommet parabolique (V), dans lequel le ratio de ce diamètre (D) par rapport à cette distance (FV) ce trouve dans la plage de 1<D/FV≤1,10.

2. Le dispositif conformément à la revendication 1, **caractérisé en ce que** la portion de surface réfléchissante (8) possède deux bords latéraux (B1, B2), ce sommet parabolique (V) est centré entre ces bords latéraux (B1, B2) et le ratio d'une distance (A) entre les bords latéraux (B1, B2) de chaque portion de surface réfléchissante (8) par rapport au diamètre (D) de la trajectoire circulaire (T) est dans la plage de 1:0.9 à 1:2.0.

3. Le dispositif conformément à la revendication 1, **caractérisé en ce que** le concentrateur réflecteur stationnaire (1) comporte une pluralité de modules concentrateurs réflecteurs (5) agencés formant une matrice à rangées longitudinales et transversales, chacun de ces modules concentrateurs réflecteurs (5) comportant un châssis (6) auquel est fixé au moins un élément supérieur (18) transportant au moins une portion de surface réfléchissante (8), dans lequel la structure stationnaire (21) est formée par ces châssis (6) des modules concentrateurs réflecteurs (5) et par une pluralité de profils de support (13a, 13b, 13c), où les châssis (6) des modules concentrateurs réflecteurs (5) de chaque rangée sont fixés aux extrémités ou côtés opposés d'au moins deux de ces profils de support (13a, 13b, 13c).

4. Le dispositif conformément à la revendication 3, **caractérisé en ce que** ce mécanisme de suivi (4) comporte au moins trois corps de base (10) fixés à au moins deux des profils de support (13a) et chacun de ces corps de base (10) supporte en rotation au moins un arbre de support (11) sur lequel est assemblé un bras pivotant (37), relié à la structure mobile (3) pour guider les mouvements de la structure mobile (3).

5. Le dispositif conformément à la revendication 3 ou 4, **caractérisé en ce que** cet élément supérieur (18) transportant cette portion de surface réfléchissante (8) de chaque module concentrateur réflecteur (5) est précisément placée dans une position de travail stable prédéterminée par rapport au châssis correspondant (6) et le châssis (6) de chaque module concentrateur réflecteur (5) comporte des premières configurations de positionnement de module (9) coopérant avec des deuxièmes configurations de positionnement de module (14) se trouvant sur ces profils de support (13a, 13b, 13c) pour positionner chaque module concentrateur réflecteur (5) et avec lui, la portion de surface réfléchissante correspondante (8) dans une position de travail prédéterminée par rapport aux profils de support (13a, 13b, 13c).

6. Le dispositif conformément à la revendication 5, **caractérisé en ce que** les profils de support (13a, 13b, 13c) comportent des éléments de fixation (16) associés à ces deuxièmes configurations de positionnement de module (14) et capables d'immobiliser ces premières configurations de positionnement de module (9) par rapport aux deuxièmes configurations de positionnement de module (14).

7. Le dispositif conformément à la revendication (6), **caractérisé en ce que** ces éléments de fixation (16) sont capables d'une action rapide par déformation élastique.

8. Le dispositif conformément à la revendication 5, **caractérisé en ce que** chaque corps de base (10) du mécanisme de suivi (4) comporte des premières configurations de positionnement de récepteur (12) précisément positionnées par rapport à cet arbre de support (11) et les profils de support correspondants (13a) ou les pièces auxiliaires (7) qui y sont fixées, comportent des deuxièmes configurations de positionnement de récepteur (15) précisément positionnées par rapport à ces deuxièmes configurations de positionnement de module (14), ces premières configurations de positionnement de récepteur (12) coopérant avec ces deuxièmes configurations de positionnement de récepteur (15) pour positionner chaque corps de base (10) dans une position de travail prédéterminée par rapport au profil de support correspondant (13a) en assurant ainsi un degré de précision prédéterminé à cette trajectoire du récepteur mobile (2) par rapport à ce concentrateur réflecteur stationnaire (1).

9. Le dispositif conformément à la revendication 8, **caractérisé en ce que** les profils de support (13a, 13b, 13c) sont agencés transversalement dans le sens de ces foyers linéaires (F) et les châssis (6) des modules réflecteurs-concentrateurs (5) de chaque rangée transversale sont fixés à leurs extrémités opposées à deux de ces profils de support (13a, 13b, 13c).

10. Le dispositif conformément à la revendication 9, **caractérisé en ce que** la pluralité de profils de support (13a, 13b, 13c) comportent au moins deux premiers profils de support (13a) et au moins un deuxième profil de support (13b), chacun étant agencé entre deux rangées transversales de modules concentrateurs réflecteurs (5), où chacun de ces premier et deuxième profils de support (13a, 13b) possède une paire de parois verticales se faisant face (40) sur lesquelles se trouvent les deuxièmes configurations de positionnement correspondantes (14), dans lequel chacun de ces premiers profils de support (13a) a la forme d'une rigole ouverte à la partie supérieure où cette paire de parois verticales se faisant face (40) s'étendent depuis les bords latéraux d'une parois de base (41) et où la pluralité des profils de support (13a, 13b, 13c) comportent en plus deux troisièmes profils de support (13c) agencés prés des extrémités extérieures de chacune des rangés transversales d'extrémités de module concentrateur réflecteur (5) où chacun de ces troisièmes profils de support (13c) possèdent une paroi verticale (40) sur laquelle sont formées les deuxièmes configurations de positionnement de module correspondantes (14).

11. Le dispositif conformément à la revendication 10, **caractérisé en ce que** chaque corps de base (10) du mécanisme de suivi (4) est un réducteur de boîte de vitesse dont l'arbre de sortie et l'arbre d'entrée (44) est relié par des moyens de transmission de mouvement à l'arbre de sortie du moteur d'entraînement (32) assemblé sur le premier profil de support correspondant (13a).

12. Le dispositif conformément à la revendication 11, **caractérisé en ce qu'**au moins deux des corps de base (10) du mécanisme de suivi (4) sont installés sur un et même premier profil de support (13a) et leurs arbres de d'entrée respectifs (44) sont reliés par des moyens de transmission de mouvement respectifs à un seul arbre d'entraînement (31) installé le long du premier profil de support (13a) et couplé à l'arbre de sortie d'un seul moteur d'entraînement (32) assemblé sur le premier profil de support (13a).

13. Le dispositif conformément à la revendication 12, **caractérisé en ce que** l'arbre de support (11) de chaque corps de base (10) est parallèle à la direction longitudinale et est relié fixe à une première extrémité d'un bras pivotant (37) qui possède une deuxième extrémité reliée par un axe d'articulation (38) à une patte correspondante (39) s'étendant vers le bas depuis la structure mobile (3), la structure stationnaire (21), ces bras pivotants (37) et la structure mobile (3) fonctionnant comme un parallélogramme articulé pour guider le mouvement de tous les éléments récepteurs (35) du récepteur mobile (2) ensemble par rapport à leurs surfaces réfléchissantes respectives le long d'une trajectoire circulaire (T), dans laquelle chaque bras pivotant (37) a un tronçon (L) entre l'arbre de support (11) et cet axe d'articulation (38) qui est égal à la moitié de ce diamètre (D) de la trajectoire circulaire (T) et la somme d'une première distance normale (d1) entre ce point inférieur (P) de la trajectoire circulaire (T) et l'arbre de support (11) et une deuxième distance normale (d2) entre l'axe d'articulation (38) et une ligne centrale (L) de l'élément récepteur (35) est égale à cette moitié du diamètre (D) de la trajectoire circulaire (T) et dans lequel l'arbre de support (11) de chaque corps de base (10) est dévié vers le bas et/ou vers un coté par rapport au centre (C) d'une quelconque des trajectoires circulaires (T).

14. Le dispositif conformément à la revendication 1, **caractérisé en ce que** la structure mobile (3), comporte une pluralité de profils longitudinaux (33) et de profils transversaux (34a, 34b), reliés entre eux formant une grille et ces éléments récepteurs (35) sont supportés à leurs extrémités entre chaque deux de ces profils transversaux (34a, 34b) dans lequel chacun de ces éléments récepteurs (35) comporte au moins un tube récepteur (36) pour un fluide caloporteur, ayant une extrémité d'entrée (36a) et une extrémité de sortie (36b) reliées et communiquées avec un circuit pour ce fluide caloporteur et dans lequel au moins un de ces profils transversaux (34a) de la structure mobile (3) est un profil ayant une coupe transversale fermée formant un conduit d'approvisionnement (63a) ou un conduit de retour (63b) de ce circuit pour le fluide caloporteur et au moins une de ces extrémités d'entrée et de sortie (36a, 36b) de chaque tube récepteur (36) est reliée et communiquée avec un conduit respectif de ces conduits d'approvisionnement et de retour (63a, 63b) formé par le profil transversal (34a).
